# EUROPEAN PATENT SPECIFICATION

(11) **EP 3 835 385 B1**
(45) Date of publication and mention of the grant of the patent: **25.01.2023**
(21) Application number: 20212910.2
(22) Date of filing: 09.12.2020
(51) Int. Cl.: C09J 151/06, C08L 51/06, C08L 23/02, C08K 5/053, C08F 255/02, C08F 285/00

(54) **THERMO-REVERSIBLE CROSSLINKED HOT-MELT ADHESIVE COMPOSITION**
THERMOREVERSIBLE VERNETZTE SCHMELZKLEBSTOFFZUSAMMENSETZUNG
COMPOSITION ADHÉSIVE THERMOFUSIBLE, RÉTICULÉ ET THERMO-RÉVERSIBLE

(30) Priority: 09.12.2019 EP 19214575
(43) Date of publication of application: 16.06.2021
(73) Proprietor: SIKA TECHNOLOGY AG, 6340 Baar (CH)
(72) Inventor: Bordeanu, Nicolae, 8400 Winterthur (CH); Gössi, Matthias, 8610 Uster (CH); Funke, Björn, 21339 Lüneburg (DE)
(74) Representative: Sika Patent Attorneys

(56) References cited:
- US-A- 4 382 128
- US-A1- 2006 293 424

## Description

### Technical field

The invention relates to hot-melt adhesives and to the use of these adhesives as an assembly adhesive, a laminating adhesive, or as an adhesive for the building of sandwich elements, in particular in the automotive industry.

### Background of the invention

Hot-melt adhesives are solvent free adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable chemical curing of the adhesive, for example, by crosslinking of the polymer chains (e.g. US2006293424). Due to the cured polymer matrix the reactive hot-melts do not soften upon heating and these adhesives are, therefore, suitable for use also at elevated temperatures. The chemical curing of the polymers can be initiated, for example, by heating or exposing the adhesive composition to water. Moisture curing hot-melt adhesives typically contain polymers functionalized with isocyanate or silane groups, which enable the crosslinking of the polymer chains upon contact with water, in particular with atmospheric moisture. Typical reactive hot-melt adhesives used in the automotive industry as assembly adhesives include moisture curing polyurethane- and polyolefin-based hot melt adhesives. Moisture curing polyurethane hot-melt (PUR-RHM) adhesives consist mainly of isocyanate-terminated polyurethane prepolymers, which have been obtained by reacting suitable polyols, typically diols, with a stoichiometric excess of polyisocyanates, typically diisocyanates. When contacted with water the residual isocyanate groups of the polyurethane prepolymers form carbamic acid, which is unstable and decomposes into an amine and carbon dioxide. The amine reacts rapidly with other isocyanate groups to form urea linkages. State-of-the-Art PUR-RHM adhesives typically have the disadvantage of having a poor adhesion on non-polar substrates such as polypropylene, polyethylene, and polystyrene. In case these adhesives are used for bonding of non-polar substrates these have to be treated with a primer, which significantly increases the application costs.

Reactive polyolefin hot-melt adhesives, in particular the ones based on amorphous poly-α-olefins (APAO), have highly non-polar properties and are, therefore, in principle suitable for bonding of non-polar substrates without pretreatment with primer compositions. Moisture curing polyolefin hot-melt adhesives typically consist mainly of poly-α-olefins, which have been functionalized with silane groups. When contacted with water, the silane groups of the polyolefin polymers, such as methoxysilane groups, react with water to form silanols, which subsequently undergo reaction with other silanol groups to form covalent bonds between individual polymer molecules as part of a condensation reaction. The improved heat resistance of the reactive polyolefin compared to the non-reactive ones makes them applicable in more challenging applications where heat stability is needed. However, a well-known weakness of this technology is that the strength of adhesion decreases with increasing temperature. The reason for the decreased adhesion at higher temperatures is that the slow and moderate moisture-induced crosslinking between the silane groups results in an elastomeric network structure, which still has a pronounced softening behavior at temperatures above the glass transition temperature of the adhesive.

There is thus a need for a novel type of hot-melt adhesive, which provides improved adhesion at elevated temperatures and good bonding on non-polar substrates, which have not been pre-treated with primer compositions.

### Summary of the invention

The object of the present invention is to provide a hot-melt adhesive composition, which overcomes or at least mitigates the disadvantages of the prior art hot-melt adhesives as discussed above.

In particular, it is an object of the present invention to provide a hot-melt adhesive composition, which provides improved adhesion at elevated temperatures and good bonding on non-polar substrates, which have not been pre-treated with primer compositions.

The subject of the present invention is a hot-melt adhesive composition as defined in claim 1.

It was surprisingly found out that a novel type of hot-melt adhesive composition comprising a thermally reversible crosslinked polymer network comprising at least one acid anhydride functionalized polymer and at least one crosslinking agent having more than one hydroxyl group per molecule, and at least one non-functionalized thermoplastic polymer provides improved adhesion at elevated temperatures as well as good bonding to non-polar substrates. Due to the presence of the thermally reversible crosslinked polymer network the hot-melt adhesive behaves like a chemically cured adhesive at normal room temperature but exhibits a low viscosity at elevated temperatures. In case the hot-melt adhesive is heated to a temperature above the gel point temperature of the adhesive, thermally activated bond-exchange reactions take place within the crosslinked polymer network by transesterification, which results in significant decrease in viscosity of the hot-melt adhesive. The bond-exchange reactions are significantly slowed down when the adhesive is cooled down below the gel point temperature. As a result of cooling, the adhesive re-gains its thermoset-like, thermally reversible crosslinked polymer network structure.

Furthermore, it was surprisingly found out that the gel point temperature of the hot-melt adhesive composition comprising the thermally reversible crosslinked polymer network can be adjusted by subjecting the adhesive composition to a further thermal treatment. This enables adjusting the melting temperature of the hot-melt adhesive composition according to the application requirements without changing the basic composition of the hot-melt adhesive.

Other aspects of the present invention are presented in other independent claims. Preferred aspects of the invention are presented in the dependent claims.

### Brief description of the Drawings

Figure 1 shows the formation of a crosslinking structure by esterification reactions between a maleic anhydride grafted polymer **AP** and a crosslinking agent **CA**.
Figure 2 shows the formation of a crosslinking structure by esterification reactions between a maleic anhydride grafted polymer **AP** and a diol as a crosslinking agent **CA**.

### Detailed description of the invention

The subject of the present invention is a hot-melt adhesive composition comprising:
a) A thermally reversibly crosslinked polymer network comprising at least one acid anhydride functionalized polymer **AP** and at least one crosslinking agent **CA** having more than one hydroxyl group per molecule and
b) At least one at 25 °C solid non-functionalized thermoplastic polymer **TP**,
wherein the at least one crosslinking agent **CA** is a diol and wherein the at least one at 25°C solid non-functionalized thermoplastic polymer **TP** comprises 5-50 wt.-% of the total weight of the hot-melt adhesive composition.

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "α-olefin" designates an alkene having the molecular formula CₓH₂ₓ (x corresponds to the number of carbon atoms), which features a carbon-carbon double bond at the first carbon atom (α-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "α-olefins" according to the present disclosure.

The term "functionalized polymer" designates polymers which are chemically modified so as to contain a functional group on the polymer backbone. In contrast, the term "non-functionalized polymer" designates polymers which are not chemically modified so as to contain functional groups such as epoxy, silane, sulfonate, amide, or anhydride group on the polymer backbone.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column, and depending on the molecule, tetrahydrofurane as a solvent, at a temperature of 35°C or 1,2,4-trichlorobenzene as a solvent, at 160 °C.

The term "softening point" or "softening temperature" designates a temperature at which compound softens in a rubber-like state, or a temperature at which the crystalline portion within the compound melts. The softening point can be measured by a Ring and Ball method according to DIN EN 1238:2011 standard.

The term "glass transition temperature" (T_{g}) designates the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The term "melting temperature" refers to a temperature at which a material undergoes transition from the solid to the liquid state. The melting temperature (Tₘ) is preferably determined by differential scanning calorimetry (DSC) according to ISO 11357-3:2018 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "open time" designates the length of a time period during which an adhesive applied to a surface of a substrate is still able to form an adhesive bond after being contacted with another substrate.

The "amount or content of at least one component X" in a composition, for example "the amount of the at least one thermoplastic polymer TP" refers to the sum of the individual amounts of all thermoplastic polymers TP contained in the composition. For example, in case the composition comprises 20 wt.-% of at least one thermoplastic polymer TP, the sum of the amounts of all thermoplastic polymers TP contained in the composition equals 20 wt.-%.

The term "room temperature" refers to a temperature of ca. 23 °C.

The hot-melt adhesive composition of the present invention can be characterized as a "thermally reversible hot-melt adhesive". The thermo-reversible properties of the hot-melt adhesive result from the presence of a thermally reversible crosslinked polymer network comprising the at least one acid anhydride functionalized polymer **AP** and the at least one crosslinking agent **CA** having more than one hydroxyl groups per molecule. The term "crosslinked" designates in the present disclosure a polymer matrix, in which the polymer chains are inter-connected by a plurality of covalent bonds. Other possible forms of crosslinked polymers such as physically crosslinked polymers are not regarded as "crosslinked" in the context of the present disclosure.

Preferably, the at least one acid anhydride functionalized polymer **AP** and the at least one crosslinking agent **CA** are bonded to each other through a crosslinking structure. According to one or more embodiments, the thermally reversibly crosslinked polymer network contains ester bonds formed by esterification reactions between the acid anhydride groups of the at least one acid anhydride functionalized polymer **AP** and the hydroxyl groups of the at least one crosslinking agent **CA**. The concentration of the reactants and products of the esterification reaction at an equilibrium state depends on the temperature of the composition. At temperatures above the melting points of the reactant polymers used, the acid anhydride groups and hydroxyl groups react to form ester bonds thereby bonding the at least one anhydride functionalized polymer **AP** and the at least one crosslinking agent **CA** to each other through a crosslinking structure, when the hot-melt adhesive is prepared. At elevated temperatures above the gel point temperature of the hot-melt adhesive, the ester bonds start to exchange by transesterification, which results in a significant decrease in viscosity of the hot-melt adhesive. Due to thermal reversibility of the crosslinking structure, the hot-melt adhesive composition can be re-melted without degrading the molecular structure of the polymer chains.

According to one or more embodiments, the thermally reversibly crosslinked polymer network of the hot-melt adhesive composition has been obtained by melt-mixing the at least one acid anhydride functionalized polymer **AP** and the at least one crosslinking agent **CA** at an elevated temperature, whereby the acid anhydride groups of the at least one acid anhydride functionalized polymer **AP** and the hydroxyl groups of the at least one crosslinking agent **CA** react to form ester bonds, followed by cooling the thus obtained mixture below the softening point of the mixture.

According to one or more embodiments, the hot-melt adhesive has a gel point temperature in the range of 100 - 235 °C, preferably of 135 - 200 °C, more preferably 145 - 200 °C, even more preferably 155 - 195 °C, wherein the gel point temperature is defined as a temperature at which the loss factor (tan δ) of the hot-melt adhesive has a value of 1 and wherein the loss factor is calculated by dividing the loss modulus (G") with the storage modulus (G') determined by dynamical mechanical analysis (DMA) according to ISO 6721-10:2015 using an applied frequency of 1 Hz and a strain level of 1.0 %.

Preferred amounts of the at least one acid anhydride functionalized polymer **AP** and the at least one crosslinking agent **CA** depend on the characteristics of these compounds and also on the desired gel point temperature of the hot-melt adhesive.

According to one or more embodiments, the ratio of the molar amount of the acid anhydride groups of the at least one acid anhydride functionalized polymer **AP** to the molar amount of the hydroxyl groups of the at least one crosslinking agent **CA** is selected such that the hot-melt adhesive has a gel point temperature in the range of 100 - 235 °C, preferably of 135 - 200 °C, more preferably 145 - 200 °C, even more preferably 155 - 195 °C, wherein the gel point temperature is determined as described above.

Preferably, the at least one acid anhydride functionalized polymer **AP** has an average of more than one acid anhydride group per molecule. Furthermore, the at least one acid anhydride functionalized polymer **AP** may contain either polymerized or grafted acid anhydride functionality, i.e. the acid anhydride moieties may be present as part of a polymer backbone or grafted onto a polymer as a side chain.

According to one or more embodiments, the at least one acid anhydride functionalized polymer **AP** has
- a softening point measured by Ring and Ball method according to DIN EN 1238:2011 of not more than 200 °C, preferably not more than 180 °C, such as in the range of 60 - 175 °C, preferably 65 - 165 °C, more preferably 70 - 165 °C, even more preferably 75 - 165 °C, still more preferably 85 - 155 °C and/or
- a number average molecular weight (Mₙ) of not more than 100000 g/mol, preferably not more than 75000 g/mol, such as in the range of 1500 - 75000 g/mol, preferably 2500 - 50000 g/mol, more preferably 3500 - 35000 g/mol, even more preferably 3500 - 30000 g/mol and/or
- a melt viscosity measured according to DIN 53019:2008-09 standard at 190 °C using a rotational viscometer of not more than 150000 mPa s, preferably not more than 100000 mPa s, in particular in the range of 500 - 150000 mPa s, preferably 500 - 100000 mPa s, more preferably 1000 - 75000 mPa s, even more preferably 1000 - 50000 mPa s, still more preferably 1250 - 35000 mPa·s.

The melt viscosity of the at least one acid anhydride functionalized polymer **AP** can be determined according to DIN 53019:2008-09 standard by using a rotational viscometer at 5 revolutions per minute using a Brookfield DV-2 Thermosel viscometer with a spindle No. 27.

Suitable acid anhydride groups for the at least one acid anhydride functionalized polymer **AP** include acid anhydride groups of aliphatic and aromatic carboxylic acids, including cyclic acid anhydride groups and non-cyclic acid anhydride groups. Examples of suitable cyclic acid anhydride groups include maleic anhydride group, phthalic anhydride group, succinic anhydride group and glutaric anhydride group. Examples of suitable non-cyclic acid anhydride groups include acetic anhydride group, propionic anhydride group and benzoic anhydride group.

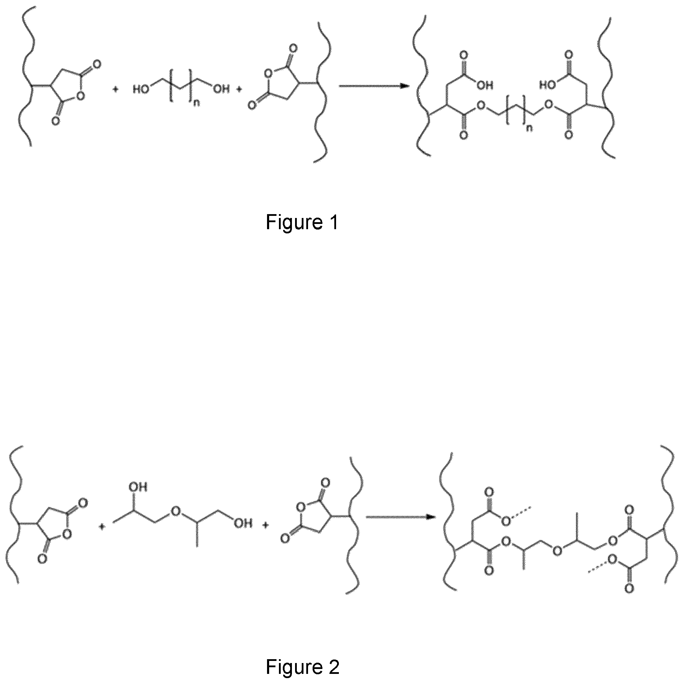

According to one or more embodiments, the at least one acid anhydride functionalized polymer **AP** is a maleic anhydride functionalized polymer, preferably a maleic anhydride grafted polymer. The formation of a crosslinking structure by esterification reactions between a maleic anhydride grafted polymer **AP** and a crosslinking agent **CA** is shown in Figure 1.

According to one or more embodiments, the at least one acid anhydride functionalized polymer **AP** is a maleic anhydride grafted polymer, preferably having a grafting degree of at least one 1.0 wt.-%, preferably at least 2.0 wt.-%, such as 2 - 15 wt.-%, preferably 4 - 15 wt.-%, more preferably 8-12 wt.-%, relative to the weight of the non-functionalized polymer.

According to one or more embodiments, the at least one acid anhydride functionalized polymer **AP** is a maleic anhydride grafted polyolefin wax, preferably having a grafting degree of at least one 1.0 wt.-%, preferably at least 2.0 wt.-%, such as 2 - 15 wt.-%, preferably 4 - 15 wt.-%, more preferably 8 - 12 wt.-%, relative to the weight of the non-functionalized wax.

The term "polyolefin wax" designates in the present disclosure low molecular weight polymers of linear or branched olefins. They include both homopolymers and copolymers of the above mentioned linear or branched olefins. Polyolefin waxes can be obtained by thermal decomposition of polyolefin plastics, in particular polyethylene plastic, or by direct polymerization of olefins. Suitable polymerization processes for the production of polyolefin waxes include, for example, free-radical processes, where α-olefins, for example, ethylene, are reacted at high pressures and temperatures to give more or less branched waxes and as well as processes, where ethylene and/or higher α-olefins, in particular propylene, are polymerized in the presence of metalorganic catalysts, for example Ziegler-Natta or metallocene catalyst, to give unbranched or branched waxes. Generally, polyolefin waxes have a semicrystalline structure at solid state.

Suitable maleic anhydride grafted waxes to be used as the at least one acid anhydride functionalized polymer **AP** include, for example, waxes of ethylene and propylene homo- and copolymers grafted with maleic anhydride, in particular polypropylene and polyethylene copolymer waxes grafted with maleic anhydride. Particularly suitably maleic anhydride grafted waxes have been prepared by free radical grafting of maleic anhydride monomer or functionalizing agent onto a polyolefin wax, preferably obtained by polymerization in the presence of metallocene catalysts.

Suitable maleic anhydride grafted polyolefin waxes are commercially available, for example, under the trade name of Licocene^{®}, for example Licocene^{®} PP MA 1332, Licocene^{®} PP MA 4351, Licocene^{®} PP MA 4221, Licocene^{®} PP MA 6452, Licocene^{®} PP MA 6252, and Licocene^{®} PP MA 7452.

According to one or more embodiments, the at least one acid anhydride functionalized polymer **AP** is a maleic anhydride grafted polypropylene wax, preferably having
- a grafting degree of at least one 1.0 wt.-%, preferably at least 2.0 wt.-%, such as 2 - 15 wt.-%, preferably 4 - 15 wt.-%, more preferably 8-12 wt.-%, relative to the weight of the non-functionalized wax and/or
- a softening point measured by Ring and Ball method according to DIN EN 1238:2011 standard of not more than 185 °C, preferably not more than 175 °C, such as in the range of 65 - 185 °C, preferably 75 - 175 °C, more preferably 85 - 170 °C, even more preferably 95 - 165 °C, still more preferably 100 - 160 °C and/or
- a melt viscosity measured according to DIN 53019:2008-09 standard at 170 °C using a rotational viscometer of not more than 10000 mPa s, preferably not more than 5000 mPa s, in particular in the range of 500 - 5000 mPa s, preferably 500 - 3500 mPa s, more preferably 500 - 3000 mPa s, even more preferably 750 - 2500 mPa s, still more preferably 750 - 2000 mPa s.

According to one or more further embodiments, the at least one acid anhydride functionalized polymer **AP** is a maleic anhydride grafted poly-α-olefin, preferably a maleic anhydride grafted amorphous poly-α-olefin, preferably having
- a grafting degree of at least one 1.0 wt.-%, preferably at least 2.0 wt.-%, such as 2 - 15 wt.-%, preferably 4 - 15 wt.-%, more preferably 8-12 wt.-%, relative to the weight of the non-functionalized polymer and/or
- a softening point measured by Ring and Ball method according to DIN EN 1238:2011 standard of not more than 185 °C, preferably not more than 175 °C, such as in the range of 65 - 175 °C, preferably 75 - 165 °C, more preferably 85 - 155 °C, even more preferably 95 - 155 °C, still more preferably 100 - 145 °C and/or
- a melt viscosity measured according to DIN 53019:2008-09 standard at 190 °C using a rotational viscometer of not more than 150000 mPa s, preferably not more than 125000 mPa s, in particular in the range of 500 - 150000 mPa s, preferably 1000 - 125000 mPa s, more preferably 1000 - 100000 mPa s, even more preferably 1500 - 75000 mPa s, still more preferably 1500 - 50000 mPa s.

Suitable maleic anhydride grafted poly-α-olefins include, for example, maleic anhydride grafted homopolymers, copolymers, and terpolymers of monomers selected from the group consisting of ethylene, propylene, 1-butene and higher α-olefins.

According to one or more further embodiments, the at least one acid anhydride functionalized polymer **AP** is a maleic anhydride grafted amorphous poly-α-olefin. The term "amorphous polymer" designates in the present disclosure polymers having a very low crystallinity degree determined by differential scanning calorimetry (DSC) measurements.

According to one or more embodiments, the at least one acid anhydride functionalized polymer **AP** is a maleic anhydride grafted amorphous poly-α-olefin having
- a heat of fusion (Hf) as determined by DSC measurements of not more than 35 J/g, preferably not more than 30 J/g, more preferably not more than 25 J/g and/or
- a xylene cold soluble content (XCS) determined at 25 °C according ISO 16152-2005 standard of at least 90 wt.-%, preferably at least 95 wt.-%, more preferably at least 99 wt.-% and/or
- lacking a crystalline melting point (Tₘ) as determined by DSC measurements.

Examples of suitable maleic anhydride grafted amorphous poly-α-olefins include maleic anhydride grafted amorphous atactic polypropylene, maleic anhydride grafted amorphous propylene-ethylene copolymer, maleic anhydride grafted amorphous propylene-butene copolymer, maleic anhydride grafted amorphous propylene-hexene copolymer, and maleic anhydride grafted amorphous propylene-ethylene-butene terpolymer. Maleic anhydride grafted amorphous poly-α-olefins are known to a person skilled in the art and they can be obtained, for example, by free radical grafting of maleic anhydride monomer or functionalizing agent to amorphous poly-α-olefins obtained by polymerization of α-olefins in the presence of a polymerization catalyst, such as a Ziegler-Natta catalyst or a metallocene catalyst or any other single-site catalyst.

According to one or more embodiments, the at least one crosslinking agent **CA** has a melting point determined by differential scanning calorimetry (DSC) according to ISO 11357-3:2018 standard using a heating rate of 2 °C/min of at or below 300 °C, preferably at or below 250 °C, more preferably at or below 200 °C, even more preferably at or below 175 °C, still more preferably at or below 150 °C.

Suitable polyols to be used as the at least one crosslinking agent **CA** include in particular divalent or multivalent alcohols having a relatively low molecular weights, such as 1,2-ethanediol, 1,2-propanediol, neopentyl glycol, dibromoneopentyl glycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, hydrogenated bisphenol A, dimeric fatty acid diols, 1,1,1-trimethylolethane, 1,1,1-trimethylolpropane, glycerol, pentaerythritol, triol-initiated polyols, such as glycerol initiated polyether polyols, sugar alcohols, such as xylitol, sorbitol or mannitol, sugars, such as saccharose, other polyhydric alcohols, and alkoxylation products of the above mentioned divalent or multivalent alcohols.

According to one or more embodiments, the at least one crosslinking agent **CA** has a molecular weight of not more than 10000 g/mol, more preferably not more than 5000 g/mol, even more preferably not more than 3500 g/mol, still more preferably not more than 2500 g/mol, in particular not more than 1500 g/mol, preferably not more than 1000 g/mol, more preferably not more than 750 g/mol.

Preferably, the at least one crosslinking agent **CA** is a diol, preferably having a molecular weight of not more than 5000 g/mol, more preferably not more than 3500 g/mol, even more preferably not more than 2500 g/mol, still more preferably not more than 1500 g/mol, in particular not more than 1000 g/mol, preferably not more than 750 g/mol, more preferably not more than 500 g/mol. The formation of a crosslinking structure by esterification reactions between a maleic anhydride grafted polymer **AP** and a diol as a crosslinking agent **CA** is shown in Figure 2

According to one or more embodiments, the at least one crosslinking agent **CA** is selected from the group consisting of aliphatic diols and polyether glycols.

Suitable aliphatic diols to be used as the at least one crosslinking agent **CA** include, for example, linear and branched aliphatic diols having 2 to 30, preferably 2 to 20 carbon atoms and cycloalkyl diols, such as 1,2-ethanediol, 1,2-propanediol, 1,4-butanediol, 1,5-pentanediol, neopentyl glycol, 3-methyl-1,5-hexanediol, 1,6-hexanediol, 1,8-octanediol, 1,10-decanediol, 1,12-dodecanediol, 1,12-octadecanediol, 1,4-cyclohexanedimethanol, hydroxypivalic neopentylglycol ester, as well as etherification products of the above listed aliphatic diols, such as diethylene glycol, triethylene glycol, dipropylene glycol, and tripropylene glycol.

Suitable polyether glycols, also known as polyoxyalkylene glycols, to be used as the at least one crosslinking agent **CA**, include for example polyethylene and polypropylene glycols, such as polyethylene glycol (PEG), methoxy polyethylene glycol (MPEG), polypropylene glycol (PPG), methoxy polypropylene glycol (MPPG), and polyethylene - polypropylene glycol (PEG-PPG) copolymers. These can be prepared, for example, by polycondensation of ethylene glycol and/or propylene glycol or by the addition of epoxides to glycols. Suitable polyether glycols are commercially available, for example, under the trade name of Carbowax^{®} (from Dow Chemical Company).

According to one or more preferred embodiments, the at least one crosslinking agent **CA** is selected from the group consisting of hexane diol and dipropylene glycol.

According to one or more embodiments, the at least one crosslinking agent **CA** is a 1,6-hexanediol and the ratio of molar amount of the acid anhydride groups of the at least one acid anhydride functionalized polymer **AP** to the molar amount of the hydroxyl groups of the at least one crosslinking agent **CA** is in the range of 1:0.9 to 1:0.5, preferably 1:0.8 to 1:0.6, more preferably 1:0.75 to 1:0.6.

According to one or more further embodiments, the at least one crosslinking agent **CA** is a dipropylene glycol and the ratio of molar amount of the acid anhydride groups of the at least one acid anhydride functionalized polymer **AP** to the molar amount of the hydroxyl groups of the at least one crosslinking agent **CA** is in the range of 1:4 to 1:1, preferably 1:3 to 1:1.25, more preferably 1:3 to 1:1.5, even more preferably 1:2.5 to 1:1.75.

Preferably, the at least one acid anhydride functionalized polymer **AP** comprises 20 - 70 wt.-%, preferably 25 - 65 wt.-%, more preferably 30 - 60 wt.-% of the total weight of the hot-melt adhesive composition and/or the at least one crosslinking agent **CA** comprises 0.05 - 15 wt.-%, preferably 0.1 - 10 wt.-%, more preferably 0.2 - 7.5 wt.-% of the total weight of the hot-melt adhesive composition.

According to one or more embodiments, the at least one at 25 °C solid non-functionalized thermoplastic polymer **TP** is a at 25 °C solid non-functionalized poly-α-olefin. Suitable at 25 °C solid poly-α-olefins include, for example, homopolymers, copolymers, and terpolymers of monomers selected from the group consisting of ethylene, propylene, 1-butene and higher α-olefins.

According to one or more embodiments, the at least one at 25 °C solid non-functionalized thermoplastic polymer **TP** has
- a softening point measured by Ring and Ball method according to DIN EN 1238:2011 standard of not more than 185 °C, preferably not more than 175 °C, such as in the range of 65 - 175 °C, preferably 75 - 165 °C, more preferably 85 - 155 °C, even more preferably 95 - 155 °C, still more preferably 100 - 145 °C and/or
- a melt viscosity measured according to DIN 53019:2008-09 standard at 190 °C using a rotational viscometer of not more than 150000 mPa s, preferably not more than 125000 mPa s, in particular in the range of 500 - 150000 mPa s, preferably 1000 - 125000 mPa s, more preferably 1000 - 100000 mPa s, even more preferably 1500 - 75000 mPa s, still more preferably 1500 - 50000 mPa s.

According to one or more embodiments, the at least one at 25 °C solid non-functionalized thermoplastic polymer **TP** is a at 25 °C solid non-functionalized atactic poly-α-olefin, preferably a at 25 °C solid non-functionalized amorphous poly-α-olefin (APAO).

According to one or more embodiments, the at least one at 25 °C solid non-functionalized thermoplastic polymer **TP** is a at 25 °C solid non-functionalized amorphous poly-α-olefin having
- a softening point measured by Ring and Ball method according to DIN EN 1238:2011 standard of not more than 185 °C, preferably not more than 175 °C, such as in the range of 65 - 175 °C, preferably 75 - 165 °C, more preferably 85 - 155 °C, even more preferably 95 - 155 °C, still more preferably 100 - 145 °C and/or
- a number average molecular weight (Mₙ) of 2500 - 75000 g/mol, preferably 3000 - 50000 g/mol, more preferably 3000 - 35000 g/mol, even more preferably 3500 - 30000 g/mol and/or
- a melt viscosity measured according to DIN 53019:2008-09 standard at 190 °C using a rotational viscometer of not more than 150000 mPa s, preferably not more than 125000 mPa s, in particular in the range of 500 - 150000 mPa s, preferably 1000 125000 mPa s, more preferably 1000 100000 mPa s, even more preferably 1500 - 75000 mPa s, still more preferably 1500 - 50000 mPa·s and/or

- a heat of fusion (Hf) as determined by DSC measurements of not more than 35 J/g, preferably not more than 30 J/g, more preferably not more than 25 J/g and/or
- a xylene cold soluble content (XCS) determined at 25 °C according ISO 16152-2005 standard of at least 90 wt.-%, preferably at least 95 wt.-%, more preferably at least 99 wt.-% and/or
- lacking a crystalline melting point (Tₘ) as determined by DSC measurements.

Examples of suitable non-functionalized amorphous poly-α-olefins to be used as the at least one at 25 °C solid non-functionalized thermoplastic polymer **TP** include amorphous propene rich propylene-α-olefin copolymers and terpolymers, in particular amorphous propylene-ethylene copolymers, amorphous propylene-butene copolymers, amorphous propylene-hexene copolymers, and amorphous propylene-ethylene-butene terpolymers. Amorphous non-functionalized poly-α-olefins are known to a person skilled in the art and they can be obtained, for example, by polymerization of α-olefins in the presence of a polymerization catalyst, such as a Ziegler-Natta catalyst or a metallocene catalyst or any other single-site catalyst.

According to one or more embodiments, the at least one at 25 °C solid non-functionalized thermoplastic polymer **TP** is selected from the group consisting of non-functionalized amorphous atactic polypropylene, non-functionalized amorphous propylene-ethylene copolymer, non-functionalized amorphous propylene-butene copolymer, non-functionalized amorphous propylene-hexene copolymer, and non-functionalized amorphous propylene-ethylene-butene terpolymer.

Suitable at 25 °C solid non-functionalized amorphous poly-α-olefins are commercially available, for example, from Evonik Industries under the trade name of Vestoplast^{®}, from Eastman Corporation under the trade name of Eastoflex^{®}, and from REXtac LLC under the trade name of REXtac^{®}.

The amount of the at least one at 25 °C solid non-functionalized thermoplastic polymer **TP** in the hot-melt adhesive composition is not particularly restricted.

The at least one at 25 °C solid non-functionalized thermoplastic polymer **TP** comprises 5-50 wt.-%, preferably 10 - 45 wt.-%, more preferably 15 - 40 wt.-%, even more preferably 20 - 35 wt.-% of the total weight of the hot-melt adhesive composition.

According to one or more embodiments, the hot-melt adhesive composition further comprises at least one hydrocarbon resin **HR** and/or at least at least one at 25 °C liquid polyolefin resin **PR**.

The term "hydrocarbon resin" designates in the present disclosure synthetic resins made by polymerizing mixtures of unsaturated monomers obtained from petroleum based feedstocks, such as by-products of cracking of natural gas liquids, gas oil, or petroleum naphthas. These types of hydrocarbon resins are also known as "petroleum resins" or as "petroleum hydrocarbon resins". The hydrocarbon resins include also pure monomer aromatic resins, which are prepared by polymerizing aromatic monomer feedstocks that have been purified to eliminate color causing contaminants and to precisely control the composition of the product.

Examples of suitable hydrocarbon resins to be used as the at least one hydrocarbon resin **HR** include C5 aliphatic resins, mixed C5/C9 aliphatic/aromatic resins, aromatic modified C5 aliphatic resins, cycloaliphatic resins, mixed C5 aliphatic/cycloaliphatic resins, mixed C9 aromatic/cycloaliphatic resins, mixed C5 aliphatic/cycloaliphatic/C9 aromatic resins, aromatic modified cycloaliphatic resins, C9 aromatic resins, as well hydrogenated versions of the aforementioned resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50 %, 70 %, or 90 %.

According to one or more embodiments, the at least one hydrocarbon resin **HR** has:
- a softening point determined by using the Ring and Ball method as defined in DIN EN 1238:2011 standard of at least 70 °C, preferably at least 80 °C, more preferably in the range of 70 - 180 °C, preferably 80 - 170 °C, more preferably 100- 160 °C and/or
- a number average molecular weight (Mₙ) in the range of 250 - 7500 g/mol, preferably 300 - 5000 g/mol, more preferably 300 - 3500 g/mol and/or
- a glass transition temperature (T_{g}) determined by dynamical mechanical analysis (DMA) as the peak of the measured loss modulus (G") curve using an applied frequency of 1 Hz and a strain level of 0.1 % of at or above 0 °C, preferably at or above 15 °C, more preferably at or above 25 °C, even more preferably at or above 35 °C, still more preferably at or above 45 °C, most preferably at or above 55 °C.

Suitable hydrocarbon resins are commercially available, for example, under the trade name of Wingtack^{®} series, Wingtack^{®} Plus, Wingtack^{®} Extra, and Wingtack^{®} STS (all from Cray Valley); under the trade name of Escorez^{®} 1000 series, Escorez^{®} 2000 series, and Escorez^{®} 5000 series (all from Exxon Mobile Chemical); under the trade name of Novares^{®} T series, Novares^{®} TT series, Novares^{®} TD series, Novares^{®} TL series, Novares^{®} TN series, Novares^{®} TK series, and Novares^{®} TV series (all from RÜTGERS Novares GmbH); and under the trade name of Kristalex^{®}, Plastolyn^{®}, Piccotex^{®}, Piccolastic^{®} and Endex^{®} (all from Eastman Chemicals).

According to one or more embodiments, the at least one hydrocarbon resin **HR** comprises, if used, 1 - 35 wt.-%, preferably 2.5 - 30 wt.-%, more preferably 5 - 25 wt.-%, even more preferably 7.5 - 20 wt.-%, most preferably 10 - 20 wt.-% of the total weight of the hot-melt adhesive composition.

According to one or more embodiments, the hot-melt adhesive composition comprises, in addition to or instead of the at least one hydrocarbon resin **HR**, preferably instead of the at least one hydrocarbon resin **HR**, at least one at 25 °C liquid polyolefin resin **PR**.

According to one or more embodiments, the at least one at 25 °C liquid polyolefin resin **PR** has a number average molecular weight (Mₙ) of not more than 10000 g/mol, preferably not more than 7500 g/mol, such as in the range of 500 - 5000 g/mol, preferably 500 - 3500 g/mol, more preferably 1000 - 3000 g/mol, even more preferably 1500 - 2500 g/mol and/or a pour point determined according to ISO 3016:2019 standard in the range of from -10 to +15 °C, preferably from -10 to +10 °C.

According to one or more embodiments, the at least one at 25 °C liquid polyolefin resin **PR** is selected from a group consisting of at 25 °C liquid polyisobutylene (PIB) and at 25 °C liquid polybutene. The term "polyisobutylene" refers in the present disclosure to polyolefins and olefin oligomers of isobutylene or 2-methyl-1-propene, preferably containing at least 75 %, more preferably at least 85 % of repeat units derived from isobutylene. The term "polybutene" refers in the present disclosure to polyolefins and olefin oligomers comprising 1-butene and/or 2-butene and/or isobutylene. The ratio of the C₄-olefin isomers can vary by manufacturer and by grade. When the C₄-olefin is exclusively 1-butene, the material is referred to as "poly-n-butene" or "PNB".

Suitable commercially available at 25 °C liquid polybutenes and polyisobutylenes include, for example, Indopol^{®} H-300 and Indopol^{®} H-1200 (from Ineos); Glissopal^{®} V230, Glissopal^{®} V500, and Glissopal^{®} V700 (from BASF); Dynapak^{®} poly 230 (from Univar GmbH, Germany); and Daelim^{®} PB 950 (from Daelim Industrial).

According to one or more embodiments, the at least one at 25 °C liquid polyolefin resin **PR** is a at 25 °C liquid polyisobutylene, preferably having a number average molecular weight (Mₙ) of not more than 5000 g/mol, more preferably not more than 3500 g/mol, even more preferably not more than 2500 g/mol and/or a pour point determined according to ISO 3016:2019 standard in the range of from -10 to +15 °C, preferably from -10 to +10 °C and/or a polydispersity index (M_{w}/Mₙ) determined by GPC, of not more than 5, preferably in the range of 0.5 - 5.0, more preferably 1.0 - 4.5, even more preferably 1.0 - 3.5, still more preferably 1.25 - 2.5.

According to one or more embodiments, the at least one at 25 °C liquid polyolefin resin **PR** comprises, if used, 1 - 45 wt.-%, preferably 2.5 - 35 wt.-%, more preferably 5 - 30 wt.-%, even more preferably 7.5 - 30 wt.-%, most preferably 10 - 25 wt.-% of the total weight of the hot-melt adhesive composition.

The adhesive composition may further comprise one or more catalysts, which are used to accelerate the reaction between acid anhydride groups and hydroxyl groups. The presence of such catalysts is not mandatory but it may be preferred. Examples of suitable catalysts to be used in the hot-melt adhesive composition include, for example, zinc acetate, zinc acetylacetonate, and 1,8-Diazabicyclo(5.4.0)undec-7-ene (DBU).

The total amount of catalysts catalyzing the reactions of acid anhydride groups and hydroxyl groups, if used, is preferably 0.005 - 2.00 wt.-%, more preferably 0.05 - 1.00 wt.-%, based on the total weigh of the hot-melt adhesive composition.

The hot-melt adhesive composition can further comprise auxiliary substances and additives, for example, those selected from the group consisting of fillers, plasticizers, adhesion promoters, UV absorption agents, UV and heat stabilizers, optical brighteners, pigments, dyes, and desiccants. Examples of suitable UV stabilizers that can be added to the adhesive composition include, for example, sterically hindered phenols. The total amount of such auxiliary substances and additives is preferably not more than 20 wt.-%, more preferably not more than 15 wt.-%, even more preferably not more than 10 wt.-%, based on the total weight of the adhesive composition.

Furthermore, the hot-melt adhesive composition of the present invention has good workability under typical application conditions of hot-melt adhesives, in particular at temperatures in the range of 150 - 200 °C, meaning that at the application temperature the adhesive has sufficiently low viscosity to enable application to a substrate in a molten state. The adhesive composition also develops a high initial strength immediately after the application to a substrate upon cooling.

According to one or more embodiments, the hot-melt adhesive composition has a viscosity at a temperature of 190°C of not more than 100000 mPa s, preferably not more than 75000 mPa s, more preferably not more than 50000 mPa s. The viscosity at temperature of 190 °C can be measured according to DIN 53019:2008-09 using conventional viscometers at 5 revolutions per minute, for example by using a Brookfield DV-2 Thermosel viscometer with a spindle No. 27.

According to one or more embodiments, the adhesive composition has a softening point measured by Ring and Ball method according to DIN EN 1238:2011 standard in the range of 100 - 160 °C, preferably 110 - 155 °C, more preferably 120 - 150 °C, even more preferably 125 - 145 °C.

Furthermore, the hot-melt adhesive composition can be provided as a one-component storage-stable composition. The term "storage-stable composition" refers in the present disclosure to a composition which, in particular in the absence of moisture, can be kept in a suitable package(s) or facility, such as a drum, a pouch or a cartridge, for example, for a period of several months up to one year or more, without suffering any service-relevant change in the application properties and/or reactivity of the composition.

The preferences given above for the at least one acid anhydride functionalized polymer **AP**, the at least one crosslinking agent **CA**, the at least one at 25 °C solid non-functionalized thermoplastic polymer **TP**, the at least one hydrocarbon resin **HR**, and to the at least one at 25 °C liquid polyolefin resin **PR** apply equally to all subjects of the present invention unless stated otherwise.

Another subject of the present invention is a method for producing a hot-melt adhesive composition of the present invention, the method comprising steps of:
i) Melt mixing the at least one acid anhydride functionalized polymer **AP**, the at least one crosslinking agent **CA**, and the at least one at 25 °C solid non-functionalized thermoplastic polymer **TP** at a first elevated temperature to obtain a homogeneously mixed mixture
   or
   i') Melt mixing the at least one acid anhydride functionalized polymer **AP** and the at least one at 25 °C solid non-functionalized thermoplastic polymer **TP** at a first elevated temperature to obtain a first homogeneously mixed mixture and
   ii') Mixing the at least one crosslinking agent **CA** with the first homogeneously mixed mixture to obtain a second homogeneously mixed mixture,
      and
ii) Cooling the homogeneously mixed mixture obtained in step i) or the second homogeneously mixed mixture obtained in step ii') to a temperature below the softening point of the mixture.

The term "melt-mixing" refers in the present disclosure to a processing operation wherein a polymer is heated above its melting point/softening point in order to mix or blend other materials, such as other polymers, into the polymer.

The term "homogeneously mixed mixture" refers in the present disclosure to compositions, in which the individual constituents are distributed substantially homogeneously in the composition. Furthermore, a homogeneously mixed mixture can be a multi-phase mixture. For a person skilled in the art it is clear that within homogeneously mixed compositions there may be regions formed, which have a slightly higher concentration of one of the constituents than other regions and that a 100 % homogeneous distribution of all the constituents is generally not achievable. Such mixed compositions with "imperfect" distribution of constituents, however, are also intended to be included by the term "homogeneously mixed mixture" in accordance with the present invention.

When the at least one acid anhydride functional polymer **AP** is melt-mixed with the at least one crosslinking agent **CA** at a first elevated temperature in step i) or ii'), the acid anhydride groups and hydroxyl groups react to form ester bonds. The formation of a crosslinked polymer network becomes more pronounced when the temperature of the homogeneously mixed mixture is reduced to below the softening point of the mixture. The cooled mixture obtained in step ii) contains a thermally reversible crosslinked polymer network, where the at least one acid anhydride functional polymer **AP** and the at least one crosslinking agent **CA** are bonded to each other through a crosslinking structure. In case the prepared the hot-melt adhesive composition is heated to a temperature above the gel point temperature of the adhesive, thermally activated bond-exchange reactions take place within the crosslinked polymer network by transesterification, which results in significant decrease in viscosity of the adhesive. The bond-exchange reactions are significantly slowed down when the hot-melt adhesive is again cooled down below the gel point temperature, which results in the hot-melt adhesive to re-gains its thermoset-like, thermally reversible crosslinked polymer network structure.

The melt-mixing of the constituents in any of the above presented steps can be conducted using any suitable mixing apparatus, such as a dispersion mixer, planetary mixer, such as planetary roller, extruder such as a twin screw extruder, kneader, such as a Buss, Banbury, or roller kneader, or a two-roll mill.

The mixing of the at least one acid anhydride functionalized polymer **AP** with the at least one at 25 °C solid thermoplastic polymer **TP** is preferably conducted at a temperature, which is above the softening point of the at least one at 25 °C solid thermoplastic polymer **TP**. According to one or more embodiments, the first elevated temperature is in the range of 100 - 200 °C, preferably 120 - 185 °C, more preferably 130 - 175 °C, even more preferably 140 - 165 °C.

According to one or more preferred embodiments, the method for producing a hot-melt adhesive composition comprises steps of:
i') Melt mixing the at least one acid anhydride functionalized polymer **AP** and the at least one at 25 °C solid non-functionalized thermoplastic polymer **TP** at a first elevated temperature to obtain a first homogeneously mixed mixture and
ii') Mixing the at least one crosslinking agent **CA** with the first homogeneously mixed mixture to obtain a second homogeneously mixed mixture, and
ii) Cooling the second homogeneously mixed mixture obtained in step ii') to a temperature below the softening point of the mixture.

According to one or more embodiments, the method for producing a hot-melt adhesive composition comprises a further step of subjecting the cooled mixture obtained in step ii) to a heat-treatment step comprising:
iii) Heating the cooled mixture to a second elevated temperature above the softening point of the mixture,
iv) Keeping the heated mixture at the second elevated temperature for a time period of at least 15 seconds, preferably at least 30 seconds,
v) Cooling the heat-treated mixture obtained in step iv) to a temperature below the softening point of the mixture.

It has been surprisingly found out that the gel point temperature of the hot-melt adhesive composition comprising a thermally reversible crosslinked polymer network can be adjusted by subjecting the adhesive composition to a further thermal treatment step. This enables adjusting the melting temperature of the hot-melt adhesive according to the application requirements without changing the basic composition of the adhesive.

According to one or more embodiments, second elevated temperature is in the range of 100 - 200 °C, preferably 120 - 185 °C, more preferably 130 - 175 °C, even more preferably 140 - 165 °C.

Another subject of the present invention is use of the hot-melt adhesive composition of the present invention as an assembly adhesive, a laminating adhesive, or as an adhesive for the building of sandwich elements.

Another subject of the present invention is a method for adhesively bonding a first substrate to a second substrate, the method comprising steps of:
I) Heating a hot-melt adhesive composition according to the present invention to provide a melted adhesive composition,
II) Applying the melted adhesive composition to a surface of the first substrate to form an adhesive film,
III) Contacting the adhesive film with a surface of the second substrate, wherein the adhesive film forms after cooling an adhesive bond between the first and second substrates.

The first and second substrates are preferably sheet-like articles having first and second major surfaces defined by peripheral edges and defining a thickness there between or three-dimensional shaped articles.

In the method for adhesively bonding a first substrate to a second substrate, the hot-melt adhesive composition is heated to a temperature above the softening point of the adhesive composition and applied on the surface of the first substrate in molten state using any conventional technique, for example, by using slot die coating, roller coating, extrusion coating, calender coating, or spray coating. The adhesive composition can be applied to the surface of the first substrate with a coating weight of, for example, 50 - 500 g/m², such as 55 - 350 g/m², in particular 65 - 150 g/m².

Especially in case the adhesive composition is applied to the surface of the first substrate as a thin film having a coating weight of, for example, less than 150 g/m², in particular less than 100 g/m², the adhesive film formed in step II) may be reactivated by heating before being contacted with the surface of the second substrate. The reactivation temperature depends on the embodiment of the adhesive composition. It may be preferable, for example, that the adhesive film is reactivated by heating to a temperature of 60 - 200 °C, in particular 70 - 180 °C, preferably 120 - 160 °C. The heating of the adhesive film can be conducted using any conventional techniques, such as heating in an oven, heating by air stream, or heating with infrared (IR)-radiation. The reactivated adhesive film is preferably contacted with the second substrate within short time after the reactivation temperature is reached, in any case within the open time of the adhesive composition.

After the adhesive film has been contacted with the surface of the second substrate, the adhesive composition develops a certain initial adhesive strength by physical curing, i.e. upon cooling. Depending on the application temperature and on the embodiment of the hot-melt adhesive composition, the thermo-reversible crosslinking reactions may begin already during the application of the adhesive composition on the surface of the first substrate. Typically, however, major part of the thermo-reversible crosslinking occurs after the application of adhesive, in particular, after the applied adhesive film has been contacted with the surface of the second substrate and upon cooling.

The first and second substrates can be composed of any conventional material including polymeric material, metal, painted metal, glass, wood, wood derived materials such as natural fiber polypropylene (NFPP), and fiber materials. Suitable polymeric materials include, for example, polyethylene (PE), in particular high density polyethylene (HDPE), polypropylene (PP), glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof. The first and second substrates can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

According to one or more embodiments, at least one of the first and second substrates is composed of a non-polar material.

According to one or more further embodiments, the first substrate, or in case the first substrate is composed of multiple layers, the layer constituting the outer exterior surface on which the adhesive composition is applied in step II) of the method, is composed of a non-polar material, preferably selected from the group consisting of polypropylene, polyethylene, and polystyrene and/or the second substrate, or in case the second substrate is composed of multiple layers, the layer constituting the outer exterior surface, which is contacted with the adhesive film in step III) of the method, is composed of a non-polar material, preferably selected from the group consisting of polypropylene, polyethylene, and polystyrene.

Still another subject of the present invention is a composite element obtainable by using the method for adhesively bonding a first substrate to a second substrate of the present invention.

The composite element of the present invention can be used, for example, for producing interior lining components of automotive vehicles. Examples of such interior lining components include door panel pieces, switch panels, rear parcel shelves, head liners, sliding roofs, center consoles, glove compartments, sun visors, pillars, door handles, arm rests, flooring, cargo flooring, and trunk area flooring as well as sleeping cabins and rear panels of trucks.

### Examples

The followings compounds and products shown in Table 1 were used in the examples.

**Table 1**

| Acid anhydride functionalized polymer AP | Maleic anhydride functionalized metallocene polypropylene wax, softening point 135-150 °C determined according to ASTM D 3104, acid value 30-50 mg KOH/g |
|---|---|
| Crosslinking agent CA1 | 1,6-Hexanediol, CAS number 629-11-8 |
| Crosslinking agent CA2 | Dipropylene glycol, CAS number 25265-71-8 |
| Crosslinking agent CA3 | Pentaerythritol, CAS number 115-77-5 |
| Crosslinking agent CA4 | Aminomethyl propanol, 124-68-5 |
| Stabilizer | Phenolic antioxidant |

The adhesive compositions presented in Table 2 were prepared according to the procedures as presented below.

### Preparation of thermo-reversible crosslinked adhesive compositions

The exemplary thermo-reversible crosslinked adhesive compositions were prepared by mixing a basic non-reactive hot-melt polyolefin adhesive composition with the polymer AP at an elevated temperature until a homogeneously mixed mixture was obtained followed by the mixing of the crosslinking agent CA.

In examples Ref-1, Ref-2, and Ex-1, a first non-reactive hot-melt polyolefin adhesive **HM-PO1** comprising the following constituents was mixed with the other constituents:
50 - 75 wt.-% of a commercially available amorphous non-functionalized poly-α-olefin having a softening point of 115-135 °C determined according to DIN EN 1427,
10 - 20 wt.-% of a commercially available aliphatic hydrocarbon resin having a softening point of 100-125 °C determined according to DIN EN 1427, and
7.5 - 12.5 wt.-% of a commercially available maleic anhydride functionalized metallocene polypropylene wax, softening point 135-150 °C determined according to ASTM D 3104.

In examples Ref-3, Ref-4, and Ex-2 to Ex-4, a second non-reactive hot-melt polyolefin adhesive **HM-PO2** comprising the following constituents was mixed with the other constituents:
40 - 65 wt.-% of a commercially available amorphous non-functionalized poly-α-olefin having a softening point of 90-115 °C determined according to DIN EN 1427,
40 - 65 wt.-% of a commercially available liquid aliphatic hydrocarbon resin having a softening point of 5-15 °C determined according to DIN EN 1427, and
3.5 - 7.5 wt.-% of a commercially available maleic anhydride functionalized metallocene polypropylene wax, softening point 150-170 °C determined according to ASTM D 3104.

In case of the crosslinking agents CA3 and CA4, a mixture composed of the polymer AP and the crosslinking agent CA either remained liquid at normal room temperature or solid at all temperatures below 300 °C, i.e. no solid to liquid transition temperature (gel point) was observed at relevant application temperatures for hot-melt adhesives. Therefore, no further tests were conducted with these crosslinking agents.

### Measurement methods

The adhesive compositions were characterized using the following measurement methods.

### Softening point

Softening points of the adhesive compositions were measured by Ring and Ball method according to DIN EN 1238:2011 standard.

### Shear adhesion failure temperature (SAFT)

For the SAFT measurements, composite specimens consisting of two polypropylene (PP) plates bonded to each other using the tested hot-melt adhesive composition were first produced.

The hot-melt adhesive composition provided in a sealed tube was preheated in an oven at a temperature of 190 °C for a time period of 20 minutes. After the heating, a sample of molten adhesive was applied on the surface of a first PP plate having a width of 25 mm and a metal wire having a thickness of 1 mm on its surface as a spacer. The adhesive was applied as a film having a thickness of 1 mm and a length of ca. 25 mm. Immediately after the application of the adhesive a second PP plate having a width of 25 mm was positioned on the first PP plate along the edge of the adhesive film to form a composite element. The second PP plate was pressed firmly against the first PP plate to remove air from adhesive bond. Any adhesive squeezed out from the joint was trimmed off with a knife. The composite element was stored for one hour at normal room temperature (23°C) before the starting of the SAFT measurements.

The composite specimens were suspended vertically from one end of the first polypropylene plate on a metal hook and placed in an oven, which had been preheated to a temperature of 40°C. A metal weight corresponding to a static load of 1 kg was attached to another metal hook fixed on the lower end of the second polypropylene plate. Three test specimens at a time were placed in the oven for the SAFT measurement.

At the beginning of the SAFT measurement, the test specimens were kept in the oven at a temperature of 40°C for a time period of 30 minutes. Then the temperature of the oven was increased at a rate of 0.37 % per minute. The temperature was increased until the adhesive bonds of all test specimens in the oven had been failed. The last measured temperature before the bond failure occurred was recorded as the representative heat stability temperature. For each tested hot-melt adhesive, two measurements were conducted. In case the difference between to measurements with same hot-melt adhesive was more than 10 °C, a third measurement was conducted.

The heat resistance values for each adhesive composition presented in Table 2 have been obtained as an average of the measurements conducted with the same hot-melt adhesive composition.

### Open time

The sample adhesive composition provided in a sealed tube was first preheated in an oven to at temperature of 190 °C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper strip had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 195 °C with the heating plate.

Immediately after application of the adhesive, the silicone paper strip was removed from the heating plate and placed (with the adhesive film facing upwards) on a sheet of plywood at room temperature (23°C) and the time was recorded as the starting point of the measurement. Every 10 seconds a short strip of silicone coated paper having dimensions of 10 cm x 1 cm and formed in a roll (non-siliconized surface facing outwards) was placed on the adhesive film and then slowly removed to separate the strip from the adhesive film. The procedure was repeated until the paper strip could not be removed from the adhesive film without damaging the paper strip or the adhesive film. The time interval between the starting point of the measurement and the last sampling point was recorded as the open time (in seconds) of the adhesive composition

The values of open time presented in Table 2 have been obtained as an average of three measurements conducted with the same adhesive composition.

### Green strength, polypropylene (PP) and acrylonitrile butadiene styrene (ABS)

The adhesive composition provided in a sealed tube was preheated in an oven to at a temperature of 190 °C for a time period of 30 minutes. After the heating, a sample of the molten adhesive was applied on the surface of a first polymeric specimen (PP or ABS) having dimensions of 100 mm x 25 mm x 5 mm. The adhesive was applied as a film having dimensions of 25 mm x 25 mm and a thickness of 1 mm.

Immediately after the application of the adhesive, a second polymeric specimen (PP or ABS) having same dimensions as the first polymeric specimen was positioned over the first polymeric specimen along the edge of the adhesive film to form a composite element. The second polymeric specimen was pressed firmly against the first polymeric specimen to remove air from adhesive bond. A weigh of 150 g was placed on the top surface of the second polymeric specimen. Any adhesive squeezed out from the joint was trimmed off with a knife. The composite specimen was stored at standard climatic conditions (23°C, 50 % relative humidity) for a period of 30 minutes before measuring of the green strength of the adhesive composition.

The green strength of the adhesive composition was determined as tensile strength of the adhesive bond. The tensile strengths were measured with a material testing apparatus (Zwick Z 020) fulfilling the requirements of the DIN 51221 standard and using a traversing speed of 10 mm/min.

The green strength values for each adhesive composition presented in Table 2 have been obtained as an average of three measurements conducted with identical composite elements prepared by using the same adhesive composition.

### Tensile strength and elongation at break

The adhesive composition provided in a sealed tube was preheated in an oven to at temperature of 190 °C for a time period of 20 minutes. After the heating, a sample of 40 g of the molten adhesive was applied with a doctor blade to surface of a silicone paper strip (B700 white, Laufenberg & Sohn KG) placed on a heating plate. The silicone paper had dimensions of 60 cm x 10 cm and the adhesive was applied as a film having a thickness of 500 µm and dimensions of 60 cm x 6 cm. Immediately after the application of the adhesive, the silicone paper strip was removed from the heating plate and stored at standard climatic conditions (23°C, 50 % relative humidity).

In a method based on DIN 53504, five rectangular test specimens having dimensions of 2.0 cm x 8.0 cm were cut from a cured adhesive film having a thickness of 500 µm. The test specimens were clamped into the tensile testing machine (Zwick Z 020) and pulled apart with a speed of 100 mm/min (test conditions 23°C/50% relative humidity). The tensile strength and elongation at break were determined based on the measured maximum tensile stress.

The values of tensile strength and elongation at break presented in Table 2 have been obtained as an average of five measurements conducted with the same adhesive composition.

### Viscosity at 190°C

The sample adhesive composition provided in a sealed tube was preheated in an oven at a temperature of 190 °C for a time period of 20 minutes. After the heating, a sample of 12.3 g of the adhesive composition was weighted and placed in a disposable sleeve to a viscometer. The viscosity was measured at temperature of 190 °C at 5 revolutions per minute using a Brookfield DV-2 Thermosel viscometer with a spindle No. 27. The values obtained with 20 minutes of tempering at the measurement temperature and five minutes of measurement were recorded as representative viscosities.

**Table 2**

| **Composition [wt.-%]** | **Ref-1** | **Ref-2** | **Ex-1** | **Ref-3** | **Ref-4** | **Ex-2** | **Ex-3** | **Ex-4** |
|---|---|---|---|---|---|---|---|---|
| HM-POP | 100.00 | 50.00 | 48.27 | 0.00 | 0.00 | 0.00 | 0.00 | 0.00 |
| HM-PO2 | 0.00 | 0.00 | 0.00 | 100.00 | 50.00 | 48.66 | 48.27 | 49.43 |
| Polymer AP | 0.00 | 50.00 | 48.27 | 0.00 | 50.00 | 48.66 | 48.27 | 49.43 |
| Crosslinking agent CA1 | 0.00 | 0.00 | 0.00 | 0.00 | 0.00 | 0.00 | 0.00 | 0.91 |
| Crosslinking agent CA2 | 0.00 | 0.00 | 3.23 | 0.00 | 0.00 | 2.45 | 3.23 | 0.00 |
| Stabilizer | 0.00 | 0.00 | 0.23 | 0.00 | 0.00 | 0.23 | 0.23 | 0.23 |
| **Total** | 100.00 | 100.00 | 100.00 | 100.00 | 100.00 | 100.00 | 100.00 | 100.00 |
| Molar ratio MAH:OH | - | - | 1 : 2 | - | - | 1 : 1.5 | 1 : 2 | 1 : 0.63 |

| **Measured properties** | | | | | | | | |
|---|---|---|---|---|---|---|---|---|
| Softening point [°C] | 130 | 133 | 137 | 131 | 136 | 139 | 140 | 137 |
| Viscosity @190 °C [mPa·s] | 15000 | 20000 | 25000 | 600 | 900 | 13500 | 30000 | 27000 |
| SAFT [°C] | 105 | 110 | 135 | n.a. | 50 | 128 | 130 | 135 |
| Open time 500 µm [s] | 30 | 25 | 25 | 100 | 30 | 30 | 25 | 20 |
| Green strength - PP [MPa] | 1.2 | 1 | 1.3 | n.a. | 1.1 | 1.3 | 1.3 | 1.25 |
| Green strength - ABS [MPa] | n.a. | 0.15 | 0.4 | n.a. | 0.15 | 0.65 | 0.65 | 0.55 |
| Tensile strenght [MPa] | 2.5 | 6.0 | 8.0 | 1.3 | 2.0 | 7.0 | 8.0 | 9.0 |
| Elongation at break [%] | 400 | 10 | 20 | 420 | 15 | 30 | 25 | 20 |

| | | | | | | | | |
|---|---|---|---|---|---|---|---|---|
| *n.a.= not analyzed | | | | | | | | |

## Claims

1. A hot-melt adhesive composition comprising:
a) A thermally reversible crosslinked polymer network comprising at least one acid anhydride functionalized polymer **AP** and at least one crosslinking agent **CA** having more than one hydroxyl group per molecule and
b) At least one at 25 °C solid non-functionalized thermoplastic polymer **TP**,
wherein the at least one crosslinking agent **CA** is a diol and wherein the at least one at 25 °C solid non-functionalized thermoplastic polymer **TP** comprises 5-50 wt.-% of the total weight of the hot-melt adhesive composition.

2. The hot-melt adhesive composition according to claim 1, wherein the thermally reversible crosslinked polymer network contains ester bonds formed by esterification reactions between acid anhydride groups of the at least one acid anhydride functionalized polymer **AP** and hydroxyl groups of the at least one crosslinking agent **CA**.

3. The hot-melt adhesive composition according to claim 1 or 2 having a gel point temperature in the range of 100 - 235 °C, preferably of 135 - 200 °C, wherein the gel point temperature is defined as a temperature at which the loss factor (tan δ) of the hot-melt adhesive composition has a value of 1 and wherein the loss factor is calculated by dividing the loss modulus (G") with the storage modulus (G') determined by dynamical mechanical analysis (DMA) according to ISO 6721-10:2015 using an applied frequency of 1 Hz and a strain level of 1.0 %.

4. The hot-melt adhesive composition according to any one of previous claims, wherein the ratio of molar amount of the acid anhydride groups of the at least one acid anhydride functionalized polymer **AP** to the molar amount of the hydroxyl groups of the at least one crosslinking agent **CA** is selected such that the hot-melt adhesive composition has a gel point temperature in the range of 100 - 235 °C, preferably of 135 - 200 °C.

5. The hot-melt adhesive composition according to any one of previous claims, wherein the at least one acid anhydride functionalized polymer **AP** is a maleic anhydride functionalized polymer, preferably a maleic anhydride grafted polymer, preferably having a softening point measured by Ring and Ball method according to DIN EN 1238:2011 of not more than 200 °C, preferably not more than 180 °C and/or has a number average molecular weight (Mₙ) of 1500 - 75000 g/mol, preferably 2500 - 50000 g/mol.

6. The hot-melt adhesive composition according to any one of previous claims, wherein the at least one acid anhydride functionalized polymer **AP** is a maleic anhydride grafted polyolefin wax, preferably having a grafting degree of 2 - 15 wt.-%, more preferably 8-12 wt.-%, relative to the weight of the non-functionalized polyolefin wax.

7. The hot-melt adhesive composition according to any one of previous claims, wherein the at least one crosslinking agent **CA** is a diol having a molecular weight of not more than 5000 g/mol, preferably not more than 3500 g/mol.

8. The hot-melt adhesive composition according to any one of previous claims, wherein the at least one crosslinking agent **CA** is selected from the group consisting of aliphatic diols and polyether glycols, preferably from the group consisting of hexane diol and dipropylene glycol.

9. The hot-melt adhesive composition according to any one of previous claims, wherein the at least one at 25 °C solid non-functionalized thermoplastic polymer **TP** is a at 25 °C solid non-functionalized amorphous poly-α-olefin, preferably having a softening point measured by Ring and Ball method according to DIN EN 1238:2011 standard in the range of 65 - 175 °C, preferably 75 - 165 °C and/or a number average molecular weight (Mₙ) of 2500 - 75000 g/mol, preferably 3000 - 50000 g/mol and/or a xylene cold soluble content (XCS) determined at 25 °C according ISO 16152-2005 standard of at least 90 wt.-%, preferably at least 95 wt.-%.

10. The hot-melt adhesive composition according to any of previous claims, wherein the at least one at 25 °C solid non-functionalized thermoplastic polymer **TP** comprises 10 - 45 wt.-%, of the total weight of the hot-melt adhesive composition.

11. The hot-melt adhesive composition according to any one of previous claims further comprising at least one hydrocarbon resin **HR** and/or at least at least one at 25 °C liquid polyolefin resin **PR**.

12. A method for producing the hot-melt adhesive composition according to any one of claims 1-11, the method comprising steps of:
i) Melt mixing the at least one acid anhydride functionalized polymer **AP**, the at least one crosslinking agent **CA**, and the at least one at 25 °C solid non-functionalized thermoplastic polymer **TP** at a first elevated temperature to obtain a homogeneously mixed mixture
or
i') Melt mixing the at least one acid anhydride functionalized polymer **AP** and the at least one at 25 °C solid non-functionalized thermoplastic polymer **TP** at a first elevated temperature to obtain a first homogeneously mixed mixture and
ii') Mixing the at least one crosslinking agent **CA** with the first homogeneously mixed mixture to obtain a second homogeneously mixed mixture,
and
ii) Cooling the homogeneously mixed mixture obtained in step i) or the second homogeneously mixed mixture obtained in step ii') to a temperature below the softening point of the mixture.

13. The method according to claim 12 comprising a further step of subjecting the cooled mixture obtained in step ii) to a heat-treatment step comprising:
iii) Heating the cooled mixture to a second elevated temperature above the softening point of the mixture,
iv) Keeping the heated mixture at the second elevated temperature for a time period of at least 15 seconds, preferably at least 30 seconds,
v) Cooling the heat-treated mixture obtained in step iv) to a temperature below the softening point of the mixture.

14. Use of the hot-melt adhesive composition according to any one of claims 1-11 as an assembly adhesive, laminating adhesive, or as an adhesive for the building of sandwich elements.

15. A method for adhesively bonding a first substrate to a second substrate, the method comprising steps of:
I) Heating a hot-melt adhesive composition according to any one of claims 1-11 to provide a melted adhesive composition,
II) Applying the melted adhesive composition to a surface of the first substrate to form an adhesive film,
III) Contacting the adhesive film with a surface of the second substrate, wherein the adhesive film forms after cooling an adhesive bond between the first and second substrates.

## Patentansprüche

1. Heißschmelzklebstoffzusammensetzung, umfassend:
a) ein thermisch reversibles vernetztes Polymernetzwerk, umfassend mindestens ein säureanhydridfunktionalisiertes Polymer **AP** und mindestens ein Vernetzungsmittel **CA** mit mindestens einer Hydroxylgruppe pro Molekül, und
b) mindestens ein bei 25 °C festes nicht funktionalisiertes thermoplastisches Polymer **TP**, wobei es sich bei dem mindestens einen Vernetzungsmittel CA um ein Diol handelt und wobei das mindestens eine bei 25 °C feste nichtfunktionalisierte thermoplastische Polymer TP 5-50 Gew.-% des Gesamtgewichts der Heißschmelzklebstoffzusammensetzung ausmacht.

2. Heißschmelzklebstoffzusammensetzung nach Anspruch 1, wobei das thermisch reversible vernetzte Polymernetzwerk durch Veresterungsreaktionen zwischen Säureanhydridgruppen des mindestens einen säureanhydridfunktionalisierten Polymers **AP** und Hydroxylgruppen des mindestens einen Vernetzungsmittels **CA** gebildete Esterbindungen enthält.

3. Heißschmelzklebstoffzusammensetzung nach Anspruch 1 oder 2 mit einer Gelpunkttemperatur im Bereich von 100-235 °C, vorzugsweise von 135-200 °C, wobei die Gelpunkttemperatur als eine Temperatur definiert ist, bei der der Verlustfaktor (tan δ) der Heißschmelzklebstoffzusammensetzung einen Wert von 1 hat und wobei der Verlustfaktor durch Dividieren des Verlustmoduls (G") durch das Speichermodul (G'), bestimmt durch dynamisch-mechanische Analyse (DMA) gemäß ISO 6721-10:2015 unter Verwendung einer angelegten Frequenz von 1 Hz und einem Dehnungsniveau von 1,0 %, berechnet wird.

4. Heißschmelzklebstoffzusammensetzung nach einem der vorhergehenden Ansprüche, wobei das Verhältnis von molare Menge der Säureanhydridgruppen des mindestens einen säureanhydridfunktionalisierten Polymers **AP** zu molarer Menge der Hydroxylgruppen des mindestens einen Vernetzungsmittels **CA** so gewählt ist, dass die Heißschmelzklebstoffzusammensetzung eine Gelpunkttemperatur im Bereich von 100-235 °C, vorzugsweise von 135-200 °C, aufweist.

5. Heißschmelzklebstoffzusammensetzung nach einem der vorhergehenden Ansprüche, wobei das mindestens eine säureanhydridfunktionalisierte Polymer **AP** ein maleinsäureanhydridfunktionalisiertes Polymer, vorzugsweise ein maleinsäureanhydridgepfropftes Polymer, vorzugsweise mit einem Erweichungspunkt, gemessen nach der Ring-und-Kugel-Methode gemäß DIN EN 1238:2011, von nicht mehr als 200 °C, vorzugsweise nicht mehr als 180 °C, ist und/oder ein zahlenmittleres Molekulargewicht (Mₙ) von 1500-75.000 g/mol, vorzugsweise 2500-50.000 g/mol, aufweist.

6. Heißschmelzklebstoffzusammensetzung nach einem der vorhergehenden Ansprüche, wobei das mindestens eine säureanhydridfunktionalisierte Polymer **AP** ein maleinsäureanhydridgepfropftes Polyolefinwachs ist, vorzugsweise mit einem Pfropfungsgrad von 2-15 Gew.-%, weiter bevorzugt 8-12 Gew.-%, bezogen auf das Gewicht des nicht funktionalisierten Polyolefinwachses.

7. Heißschmelzklebstoffzusammensetzung nach einem der vorhergehenden Ansprüche, wobei das mindestens eine Vernetzungsmittel **CA** ein Diol mit einem Molekulargewicht von nicht mehr als 5000 g/mol, vorzugsweise nicht mehr als 3500 g/mol, ist.

8. Heißschmelzklebstoffzusammensetzung nach einem der vorhergehenden Ansprüche, wobei das mindestens eine Vernetzungsmittel **CA** aus der Gruppe bestehend aus aliphatischen Diolen und Polyetherglykolen, vorzugsweise aus der Gruppe bestehend aus Hexandiol und Dipropylenglykol, ausgewählt ist.

9. Heißschmelzklebstoffzusammensetzung nach einem der vorhergehenden Ansprüche, wobei das mindestens eine bei 25 °C feste nicht funktionalisierte thermoplastische Polymer **TP** ein bei 25° festes nicht funktionalisiertes amorphes Poly-α-olefin ist, vorzugsweise mit einem Erweichungspunkt, gemessen nach der Ring-und-Kugel-Methode gemäß der Norm DIN EN 1238:2011, im Bereich von 65-175 °C, vorzugsweise 75-165 °C, und/oder einem zahlenmittleren Molekulargewicht (Mₙ) von 2500-75.000 g/mol, vorzugsweise 3000-50.000 g/mol, und/oder einem Gehalt an in kaltem Xylol löslichen Anteilen (XCS), bestimmt bei 25 °C gemäß der Norm ISO 16152-2005, von mindestens 90 Gew.-%, vorzugsweise mindestens 95 Gew.-%.

10. Heißschmelzklebstoffzusammensetzung nach einem der vorhergehenden Ansprüche, wobei das mindestens eine bei 25 °C feste nicht funktionalisierte thermoplastische Polymer **TP** 10-45 Gew.-% des Gesamtgewichts der Heißschmelzklebstoffzusammensetzung ausmacht.

11. Heißschmelzklebstoffzusammensetzung nach einem der vorhergehenden Ansprüche, ferner umfassend mindestens ein Kohlenwasserstoffharz **HR** und/oder mindestens ein bei 25 °C flüssiges Polyolefinharz **PR**.

12. Verfahren zur Herstellung der Heißschmelzklebstoffzusammensetzung nach einem der Ansprüche 1-11, wobei das Verfahren folgende Schritte umfasst:
i) Schmelzemischen des mindestens einen säureanhydridfunktionalisierten Polymers **AP**, des mindestens einen Vernetzungsmittels **CA** und des mindestens einen bei 25 °C festen nicht funktionalisierten thermoplastischen Polymers **TP** bei einer ersten erhöhten Temperatur zum Erhalt einer homogen gemischten Mischung
oder
i') Schmelzemischen des mindestens einen säureanhydridfunktionalisierten Polymers **AP** und des mindestens einen bei 25 °C festen nicht funktionalisierten thermoplastischen Polymers **TP** bei einer ersten erhöhten Temperatur unter Erhalt einer ersten homogen gemischten Mischung und
ii') Mischen des mindestens einen Vernetzungsmittels **CA** mit der ersten homogen gemischten Mischung zum Erhalt einer zweiten homogen gemischten Mischung,
und
ii) Abkühlen der in Schritt i) erhaltenen homogen gemischten Mischung oder der in Schritt ii') erhaltenen zweiten homogen gemischten Mischung auf eine Temperatur unterhalb des Erweichungspunkts der Mischung.

13. Verfahren nach Anspruch 12, umfassend einen weiteren Schritt des Wärmebehandelns der in Schritt ii) erhaltenen abgekühlten Mischung, umfassend:
iii) Erhitzen der abgekühlten Mischung auf eine zweite erhöhte Temperatur oberhalb des Erweichungspunkts der Mischung,
iv) Halten der erhitzten Mischung bei der zweiten erhöhten Temperatur über einen Zeitraum von mindestens 15 Sekunden, vorzugsweise mindestens 30 Sekunden,
v) Abkühlen der in Schritt iv) erhaltenen wärmebehandelten Mischung auf eine Temperatur unterhalb des Erweichungspunkts der Mischung.

14. Verwendung der Heißschmelzklebstoffzusammensetzung nach einem der Ansprüche 1-11 als Montageklebstoff, Kaschierklebstoff oder als Klebstoff zum Aufbau von Sandwichelementen.

15. Verfahren zur Verklebung eines ersten Substrats mit einem zweiten Substrat, wobei das Verfahren folgende Schritte umfasst:
I) Erhitzen einer Heißschmelzklebstoffzusammensetzung nach einem der Ansprüche 1-11 zur Bereitstellung einer geschmolzenen Klebstoffzusammensetzung,
II) Aufbringen der geschmolzenen Klebstoffzusammensetzung auf eine Oberfläche des ersten Substrats zur Bildung eines Klebstofffilms,
III) Kontaktieren des Klebstofffilms mit einer Oberfläche des zweiten Substrats, wobei der Klebstofffilm nach dem Abkühlen eine Klebverbindung zwischen dem ersten Substrat und dem zweiten Substrat bildet.

## Revendications

1. Composition d'adhésif thermofusible comprenant :
a) un réseau de polymère réticulé thermiquement réversible comprenant au moins un polymère fonctionnalisé par anhydride AP d'acide et au moins un agent de réticulation CA possédant plus d'un groupe hydroxyle par molécule et
b) au moins un polymère thermoplastique TP non fonctionnalisé solide à 25 °C,
l'au moins un agent de réticulation CA étant un diol et l'au moins un polymère thermoplastique TP non fonctionnalisé solide à 25 °C représentant 5 à 50 % en poids du poids total de la composition d'adhésif thermofusible.

2. Composition d'adhésif thermofusible selon la revendication 1, le réseau de polymère réticulé thermiquement réversible contenant des liaisons ester formées par des réactions d'estérification entre des groupes anhydride d'acide de l'au moins un polymère fonctionnalisé par anhydride AP d'acide et des groupes hydroxyle de l'au moins un agent de réticulation CA.

3. Composition d'adhésif thermofusible selon la revendication 1 ou 2 possédant une température de point de gel dans la plage de 100 à 235 °C, préférablement de 135 à 200 °C, la température de point de gel étant définie comme une température à laquelle le facteur de perte (tan δ) de la composition d'adhésif thermofusible possède une valeur de 1 et le facteur de perte étant calculé en divisant le module de perte (G") par le module de conservation (G') déterminé par analyse mécanique dynamique (DMA) selon la norme ISO 6721-10:2015 en utilisant une fréquence appliquée de 1 Hz et un taux de contrainte de 1,0 %.

4. Composition d'adhésif thermofusible selon l'une quelconque des revendications précédentes, le rapport de la quantité molaire des groupes anhydride d'acide de l'au moins un polymère fonctionnalisé par anhydride AP d'acide sur la quantité molaire des groupes hydroxyle de l'au moins un agent de réticulation CA étant choisi de sorte que la composition d'adhésif thermofusible possède une température de point de gel dans la plage de 100 à 235 °C, préférablement de 135 à 200 °C.

5. Composition d'adhésif thermofusible selon l'une quelconque des revendications précédentes, l'au moins un polymère fonctionnalisé par anhydride AP d'acide étant un polymère fonctionnalisé par l'anhydride maléique, préférablement un polymère greffé par de l'anhydride maléique, préférablement possédant un point de ramollissement mesuré par un procédé à anneau et à bille selon la norme DIN EN 1238:2011 de pas plus de 200 °C, préférablement de pas plus de 180 °C et/ou possédant un poids moléculaire moyen en nombre (Mₙ) de 1 500 à 75 000 g/mole, préférablement de 2 500 à 50 000 g/mole.

6. Composition d'adhésif thermofusible selon l'une quelconque des revendications précédentes, l'au moins un polymère fonctionnalisé par anhydride AP d'acide étant une cire de polyoléfine greffée par anhydride maléique, préférablement possédant un degré de greffage de 2 à 15 % en poids, plus préférablement de 8 à 12 % en poids, par rapport au poids de la cire de polyoléfine non fonctionnalisée.

7. Composition d'adhésif thermofusible selon l'une quelconque des revendications précédentes, l'au moins un agent de réticulation CA étant un diol possédant un poids moléculaire de pas plus de 5 000 g/mole, préférablement de pas plus de 3 500 g/mole.

8. Composition d'adhésif thermofusible selon l'une quelconque des revendications précédentes, l'au moins un agent de réticulation CA étant choisi dans le groupe constitué par des diols aliphatiques et des polyéther glycols, préférablement dans le groupe constitué par l'hexanediol et le dipropylèneglycol.

9. Composition d'adhésif thermofusible selon l'une quelconque des revendications précédentes, l'au moins un polymère thermoplastique TP non fonctionnalisé solide à 25 °C étant une poly-α-oléfine amorphe non fonctionnalisée solide à 25 °C, préférablement possédant un point de ramollissement mesuré par un procédé à anneau et à bille selon la norme DIN EN 1238:2011 dans la plage de 65 à 175 °C, préférablement de 75 à 165 °C et/ou un poids moléculaire moyen en nombre (Mₙ) de 2 500 à 75 000 g/mole, préférablement de 3 000 à 50 000 g/mole et/ou une teneur soluble à froid dans un xylène (XCS) déterminée à 25 °C selon la norme ISO 16152-2005 d'au moins 90 % en poids, préférablement d'au moins 95 % en poids.

10. Composition d'adhésif thermofusible selon l'une quelconque des revendications précédentes, l'au moins un polymère thermoplastique TP non fonctionnalisé solide à 25 °C représentant 10 à 45 % en poids, du poids total de la composition d'adhésif thermofusible.

11. Composition d'adhésif thermofusible selon l'une quelconque des revendications précédentes comprenant en outre au moins une résine d'hydrocarbure HR et/ou au moins une résine de polyoléfine PR liquide à 25 °C.

12. Procédé pour la production de la composition d'adhésif thermofusible selon l'une quelconque des revendications 1 à 11, le procédé comprenant les étapes de :
i) mélange en fusion de l'au moins un polymère fonctionnalisé par anhydride AP d'acide, de l'au moins un agent de réticulation CA, et de l'au moins un polymère thermoplastique TP non fonctionnalisé solide à 25 °C à une première température élevée pour obtenir un mélange mélangé de manière homogène
ou
i') mélange en fusion de l'au moins un polymère fonctionnalisé par anhydride AP d'acide et de l'au moins un polymère thermoplastique TP non fonctionnalisé solide à 25 °C à une première température élevée pour obtenir un premier mélange mélangé de manière homogène et
ii') mélange de l'au moins un agent de réticulation CA avec le premier mélange mélangé de manière homogène pour obtenir un deuxième mélange mélangé de manière homogène,
et
ii) refroidissement du mélange mélangé de manière homogène obtenu dans l'étape i) ou du deuxième mélange mélangé de manière homogène obtenu dans l'étape ii') à une température en dessous du point de ramollissement du mélange.

13. Procédé selon la revendication 12 comprenant une étape supplémentaire de soumission du mélange refroidi obtenu dans l'étape ii) à une étape de traitement thermique comprenant :
iii) le chauffage du mélange refroidi à une deuxième température élevée supérieure au point de ramollissement du mélange,
iv) le maintien du mélange chauffé à la deuxième température élevée pendant une période de temps d'au moins 15 secondes, préférablement d'au moins 30 secondes,
v) le refroidissement du mélange traité thermiquement obtenu dans l'étape iv) à une température en dessous du point de ramollissement du mélange.

14. Utilisation de la composition d'adhésif thermofusible selon l'une quelconque des revendications 1 à 11 comme un adhésif d'assemblage, un adhésif de stratification, ou comme un adhésif pour la construction d'éléments en sandwich.

15. Procédé pour la liaison de manière adhésive d'un premier substrat à un deuxième substrat, le procédé comprenant les étapes de :
I) chauffage d'une composition d'adhésif thermofusible selon l'une quelconque des revendications 1 à 11 pour fournir une composition d'adhésif fondue,
II) application de la composition d'adhésif fondue sur une surface du premier substrat pour former un film d'adhésif,
III) mise en contact du film d'adhésif avec une surface du deuxième substrat, le film d'adhésif formant après refroidissement une liaison adhésive entre les premier et deuxième substrats.
